# EUROPEAN PATENT SPECIFICATION

(11) **EP 0 555 282 B1**
(45) Date of publication and mention of the grant of the patent: **11.09.1996**
(21) Application number: 91918717.9
(22) Date of filing: 31.10.1991
(51) Int. Cl.: G06K 11/18

(54) **DATA INPUT DEVICE HAVING MORE THAN TWO DEGREES OF FREEDOM**
DATENEINGABEVORRICHTUNG MIT MEHR ALS ZWEI FREIHEITSGRADEN
DISPOSITIF DE SAISIE DE DONNEES POSSEDANT PLUS DE DEUX DEGRES DE LIBERTE

(30) Priority: 01.11.1990 GB 9023760; 31.01.1991 GB 9102144
(43) Date of publication of application: 18.08.1993
(73) Proprietor: QUEEN MARY AND WESTFIELD COLLEGE, London E1 4NS (GB)
(72) Inventor: DAVISON, Allan, Joseph, London E1 4NS (GB); SLATER, Melvyn, Queen Mary & Westfield College, London E1 4NS (GB)
(74) Representative: Shindler, Nigel
(86) International application number: GB9101912
(87) International publication number: WO9208208

(56) References cited:
- GB-A- 2 234 575
- US-A- 4 763 100
- PATENT ABSTRACTS OF JAPAN vol.12, no.354 (P-761) 22 September 1988 & JP-A-63 106 824

## Description

This invention relates to an input controller suitable for inputting data into a computer or other electronic processing unit. The input controller is particularly suitable for inputting positional data concerning three dimensional movement.

Positional information, for example that relating to the control of a cursor or other icon, is normally input into a computer using a conventional mouse or trackerball. A conventional mouse is moved across a surface such as a desk in order to rotate a ball contained within a housing, the rotation of the ball being detected and converted to positional data signals readable by the computer. However, such a mouse, which is moved in two dimensions across a desk, does not easily lend itself to providing positional information in three dimensions.

3-D interaction devices are known which are based on the Polhemus (TM) sensor, where a detector is moved in a three dimensional magnetic field array. Examples of such devices are the Dataglove (TM) and the Flying Mouse (a trademark of SimGraphics Engineering Corp.). However, such devices measure absolute movement in all directions once activated, and it is not uncommon for users to experience difficulty in that physically awkward orientations are required. Furthermore, difficulty can often be experienced in providing the large amount of movement necessary to input instructions for correspondingly large amounts of movement of the cursor.

JP-A-63 106 824 discloses a mouse having one or more levers for inputting data relating to other dimensions. US-A-4 763 100 discloses a joystick for inputting data relating to three degrees of freedom of movement.

The present invention provides an input controller which is capable of providing three dimensional interaction with a computer, and which avoids some of the disadvantages of the prior art devices previously described.

Accordingly, there is provided an input controller comprising a base adapted to be moved in contact with a surface; and means for measuring the relative movement of the base with respect to the surface; characterised by a housing mounted on the base for movement therewith with respect to the surface, the housing being mounted on the base such that it is movable with respect thereto in at least two degrees of freedom; and means for measuring the movement of the housing with respect to the base in each of the at least two degrees of freedom.

The device therefore remains on the desk-top providing relative movement measurements in two dimensions, whilst three dimensional interaction is accommodated by the movement of the housing with respect to the base. The housing is preferably mounted on the base by means of a joystick arrangement, the joystick being pivotable longitudinally and laterally of the base or any combination thereof. In this way, the housing may be typically moved with respect to the base to provide forward and back rotation (pitch) and left and right rotation (roll), to complement the x-y movement of the device on the desk-top.

Conveniently, the means for measuring the movement of the housing in the at least two degrees of freedom includes a potentiometer adapted to be rotated by movement of the joystick in each of the longitudinal and lateral directions. The joystick is conveniently connected to each potentiometer via a coupling which transfers movement in either the longitudinal or lateral directions into a rotation of the appropriate potentiometer. The potentiometers therefore measure the movement of the housing with respect to the base, so as to adjust accordingly the data input signals which are fed to the computer or other electronic processing unit.

According to a preferred arrangement the housing is mounted on the base such that it is movable with respect thereto in three degrees of freedom. In particular, the housing is conveniently mounted such that rotation of the housing around the longitudinal axis of the joystick (yaw) is accommodated. There is conveniently provided means for measuring the movement of the housing with respect to the base in the third degree of freedom. As before, this is typically a potentiometer. In one convenient arrangement, the housing is allowed to rotate with respect to the joystick, and a potentiometer measures the movement therebetween. According to an alternative arrangement, the housing and the joystick rotate together, and a potentiometer measures the relative rotation between the joystick and the base.

Preferably the base includes an opening adapted to accommodate a rotatable ball, and there is a rotatable ball retained within the opening such that movement of the base in contact with a surface causes a corresponding rotation of the ball. It will, however, be appreciated by those skilled in the art that alternative mouse arrangements, such as those based on optical grid arrays, can be employed.

The housing conveniently is in the form of a dome, and preferably further includes one or more finger-operable input elements, such as pushbutton keys, pressure sensitive pads, or other types of switch element.

The invention will now be further described by way of example only, with reference to the accompanying drawings, in which;
Figure 1 is a schematic diagram of an input controller according to the present invention; and
Figure 2 is an exploded diagram of some of the internal features of the input controller of Figure 1.

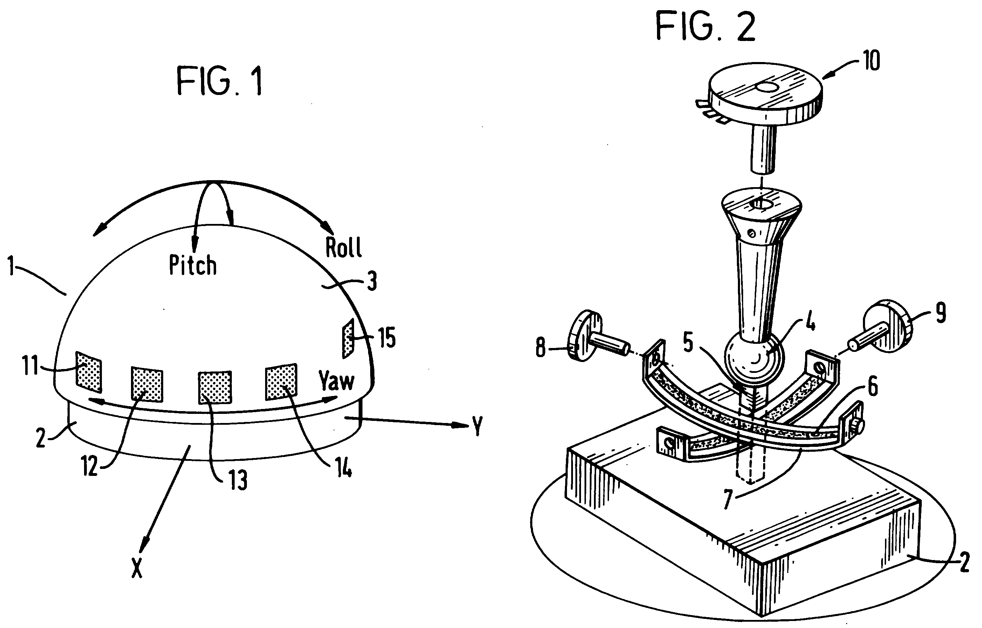

Referring to the drawings, an input controller device shown generally at 1 comprises a base 2 containing a conventional ball-type mechanism (not shown), such that the base can be easily moved in the x & y directions when in contact with a surface such as a desktop. Mounted on the base 2 is a dome shaped housing 3 which is movable relative to the base, having three different degrees of freedom with respect thereto. Firstly, the housing 3 is pivotable back and forth generally along the x-direction and this will be referred to herein as pitch. Secondly the housing is pivotable from side to side generally along the y-direction, and this will be referred to herein as roll. Thirdly the housing 3 can rotate with respect to the base 2 through 360° and this will be referred to herein as yaw. These three types of movement are depicted in Figure 1 and the types of movement can be effected individually or in combination, giving, together with the x-y translation of the base 2 a total of five degrees of freedom of movement.

Figure 2 shows how the movement of the housing 3 is accomplished. A joystick 4 is connected to the base 2 by a universal joint (not shown). The joystick 4 has a portion 5 which is of a generally square cross section, the portion 5 being constrained within first and second linkages 6 and 7. Linkage 6 is caused to rotate by back and forth pivoting of the joystick, the rotation of the linkage 6 being transferred to a potentiometer 8. In similar fashion, linkage 7 is caused to rotate by side to side pivoting of the joystick, the rotation of the linkage 7 being transferred to a potentiometer 9.

The domed housing 3 is mounted on the joystick 4 so as to be rotatable with respect thereto. A further potentiometer 10, mounted in the domed housing, rotates therewith and measures the rotation of the housing 3 with respect to the joystick 4.

In operation, the device is placed on a flat surface such as a desk-top and the user rests a hand on the domed housing 3. Translational movement of the device 1 over the desk-top in the x and y directions is detected by the mouse mechanism in the base 2. In addition, the user can tilt and rotate the housing 3 with respect to the base 2 in order to signify pitch, roll and yaw instructions to the computer cursor, thereby facilitating movement of the cursor in three dimensions. Further instructions can be input by the user by means of pushbutton keys 11 to 15, which are located on the housing 3 so as to be operable by the fingers of the user.

It should be noted that the device combines the relative movement detection of the mouse arrangement in the base, with the absolute movement detection of the housing relative to the base. In this way, large movements can be input by repeated sweeps of the device over the desk-top, whilst the feature that the device remains on the desk-top avoids the necessity for the user to attempt physically awkward orientations in inputting three dimensional movement instructions.

It will be appreciated that whilst the above described arrangement detects rotational movement of the housing 3 with respect to the base 2, other arrangements are possible. For example the housing 3 and base 2 could be allowed to rotate together, the rotation between the mouse arrangement and the desk-top being detected, typically by an optical grid assay system.

## Claims

1. An input controller comprising a base (2) adapted to be moved in contact with a surface; and means for measuring the relative movement of the base with respect to the surface; characterised by a housing (3) mounted on the base for movement therewith with respect to the surface, the housing being mounted on the base such that it is movable with respect thereto in at least two degrees of freedom; and means (6-10) for measuring the movement of the housing with respect to the base in each of the at least two degrees of freedom.

2. An input controller according to Claim 1 wherein the housing is mounted on the base by means of a joystick arrangement, the joystick being pivotable longitudinally and laterally of the base.

3. An input controller according to Claim 2 wherein the means for measuring the movement of the housing in each of the at least two degrees of freedom includes a potentiometer adapted to be rotated by movement of the joystick in the longitudinal direction.

4. An input controller according to Claim 2 or Claim 3 wherein the means for measuring the movement of the housing in each of the at least two degrees of freedom includes a potentiometer adapted to be rotated by movement of the joystick in the lateral direction.

5. An input controller according to any of Claims 1 to 4 wherein the housing is mounted on a base such that it is movable with respect thereto in three degrees of freedom.

6. An input controller according to Claim 5 wherein there is provided means for measuring the movement of the housing with respect to the base in the third degree of freedom.

7. An input controller according to Claim 5 or Claim 6 wherein the housing is rotatable with respect to the base.

8. An input controller according to Claim 7 and any of Claims 2 to 4 wherein the housing is rotatable with respect to the joystick.

9. An input controller according to any of Claims 6 to 8 wherein the means for measuring the movement of the housing with respect to the base in the third degree of freedom includes a potentiometer (10) adapted to be rotated by the rotation of the housing with respect to the joystick.

10. An input controller according to any of Claims 1 to 9 wherein the base includes an opening adapted to accommodate a rotatable ball, and there is a rotatable ball retained within the opening such that movement of the base in contact with a surface causes a corresponding rotation of the ball.

11. An input controller according to any of Claims 1 to 10 wherein the housing is in the form of a dome.

12. An input controller according to any of Claims 1 to 11 wherein the housing further includes one or more finger-operable input elements (11-14).

13. An input controller according to Claim 12 wherein the finger operable input elements are pushbutton keys.

## Revendications

1. Contrôleur d'entrée comprenant une base (2) adaptée pour être déplacée en contact avec une surface ; et des moyens pour mesurer le mouvement relatif de la base par rapport à la surface ; caractérisé par un carter (3) monté sur la base pour un déplacement avec celle-ci par rapport à la surface, le carter étant monté sur la base de telle sorte qu'il soit mobile par rapport à celui-ci dans au moins deux degrés de liberté ; et des moyens (6-10) pour mesurer le déplacement du carter par rapport à la base dans chacun des au moins deux degrés de liberté.

2. Contrôleur d'entrée selon la revendication 1, dans lequel le carter est monté sur la base au moyen d'un agencement de manette, la manette étant pivotante longitudinalement et latéralement par rapport à la base.

3. Contrôleur d'entrée selon la revendication 2, dans lequel les moyens pour mesurer le déplacement du carter dans chacun des au moins deux degrés de liberté comprend un potentiomètre adapté pour être mis en rotation par mouvement de la manette dans la direction longitudinale.

4. Contrôleur d'entrée selon la revendication 2 ou la revendication 3, dans lequel les moyens pour mesurer le mouvement du carter dans chacun des au moins deux degrés de liberté comprend un potentiomètre adapté pour être mis en rotation par un mouvement de la manette dans la direction latérale.

5. Contrôleur d'entrée selon l'une quelconque des revendications 1 à 4, dans lequel le carter est monté sur une base de telle sorte qu'il puisse être déplacé par rapport à celle-ci dans trois degrés de liberté.

6. Contrôleur d'entrée selon la revendication 5, dans lequel il est prévu des moyens pour mesurer le mouvement du carter par rapport à la base dans le troisième degré de liberté.

7. Contrôleur d'entrée selon la revendication 5 ou la revendication 6, dans lequel le carter peut tourner par rapport à la base.

8. Contrôleur d'entrée selon la revendication 7 et l'une quelconque des revendications 2 à 4, dans lequel le carter peut être mis en rotation par rapport à la manette.

9. Contrôleur d'entrée selon l'une quelconque des revendications 6 à 8, dans lequel les moyens pour mesurer le mouvement du carter par rapport à la base dans le troisième degré de liberté comprennent un potentiomètre (10) adapté pour tourner par la rotation du carter par rapport à la manette.

10. Contrôleur d'entrée selon l'une quelconque des revendications 1 à 9, dans lequel la base comprend une ouverture adaptée pour loger une bille rotative, et il existe une bille rotative retenue à l'intérieur de l'ouverture de sorte que le mouvement de la base en contact avec une surface provoque une rotation correspondante de la bille.

11. Contrôleur d'entrée selon l'une quelconque des revendications 1 à 10 , dans lequel le carter a la forme d'un dôme.

12. Contrôleur d'entrée selon l'une quelconque des revendications 1 à 11, dans lequel le carter comprend en outre un ou plusieurs éléments d'entrée manoeuvrables par le doigt (11-14).

13. Contrôleur d'entrée selon la revendication 12, dans lequel les éléments d'entrée manoeuvrables par le doigt sont des touches boutons-poussoirs.

## Patentansprüche

1. Eingabesteuerwerk mit einer Basis (2), die in Berührung mit einer Oberfläche bewegt werden kann, und Einrichtungen zur Messung der Relativbewegung der Basis zu der Oberfläche, gekennzeichnet durch ein Gehäuse (3), das auf der Basis zur Bewegung mir ihr in bezug auf die Oberfläche angebracht ist, wobei die Anbringung auf der Basis so ist, daß es in bezug auf diese in wenigstens zwei Freiheitsgraden beweglich ist, und Einrichtungen (6-10) zur Messung der Bewegung des Gehäuses in bezug auf die Basis in jedem der wenigstens zwei Freiheitsgrade.

2. Eingabesteuerwerk nach Anspruch 1, bei dem das Gehäuse auf der Basis mittels einer Steuerknüppel-Anordnung angebracht ist, wobei der Steuerknüppel längs und quer zur Basis schwenkbar ist.

3. Eingabesteuerwerk nach Anspruch 2, bei dem die Einrichtung zur Messung der Gehäusebewegung in jedem der wenigstens zwei Freiheitsgrade ein Potentiometer umfaßt, das durch Bewegung des Steuerknüppels in der Längsrichtung gedreht werden kann.

4. Eingabesteuerwerk nach Anspruch 2 oder Anspruch 3, bei dem die Einrichtung zur Messung der Gehäusebewegung in jedem der wenigstens zwei Freiheitsgrade ein Potentiometer umfaßt, das durch Bewegung des Steuerknüppels in der Querrichtung gedreht werden kann

5. Eingabesteuerwerk nach einem der Ansprüche 1 bis 4, bei dem das Gehäuse auf der Basis so angebracht ist, daß es zu ihr in drei Freiheitsgraden beweglich ist.

6. Eingabesteuerwerk nach Anspruch 5, bei dem eine Einrichtung zur Messung der Gehäusebewegung in bezug auf die Basis in dem dritten Freiheitsgrad vorgesehen ist.

7. Eingabesteuerwerk nach Anspruch 5 oder Anspruch 6, bei dem das Gehäuse in bezug auf die Basis drehbar ist.

8. Eingabesteuerwerk nach Anspruch 7 und einem der Ansprüche 2 bis 4, bei dem das Gehäuse in bezug auf den Steuerknüppel drehbar ist.

9. Eingabesteuerwerk nach einem der Ansprüche 6 bis 8, bei dem die Einrichtung zur Messung der Gehäusebewegung in bezug auf die Basis in dem dritten Freiheitsgrad ein Potentiometer (10) umfaßt, das durch die Drehung des Gehäuses in bezug auf den Steuerknüppel gedreht werden kann.

10. Eingabesteuerwerk nach einem der Ansprüche 1 bis 9, bei dem die Basis eine Öffnung zur Aufnahme einer drehbaren Kugel umfaßt und die drehbare Kugel in der Öffnung so gehalten ist, daß eine Bewegung der Basis in Berührung mit der Oberfläche eine entsprechende Drehung der Kugel verursacht.

11. Eingabesteuerwerk nach einem der Ansprüche 1 bis 10, bei dem das Gehäuse die Form einer Kuppel hat.

12. Eingabesteuerwerk nach einem der Ansprüche 1 bis 11, bei dem das Gehäuse ferner ein oder mehrere durch Finger betätigbare Eingabeelemente (11-14) umfaßt.

13. Eingabesteuerwerk nach Anspruch 12, bei dem die durch Finger betätigbaren Eingabeelemente Drucktasten sind.
